# EUROPEAN PATENT SPECIFICATION

(11) **EP 2 393 275 B1**
(45) Date of publication and mention of the grant of the patent: **22.08.2018**
(21) Application number: 11163807.8
(22) Date of filing: 27.04.2011
(51) Int. Cl.: H04N 1/32, H04N 1/00

(54) **Information processing system, information processing apparatus, control method thereof, and program**
Informationsverarbeitungssystem, Informationsverarbeitungsvorrichtung, Steuerverfahren dafür und Programm
Appareil de traitement d'informations, appareil de traitement d'informations, son procédé de commande, et programme

(30) Priority: 01.06.2010 JP 2010125992
(43) Date of publication of application: 07.12.2011
(73) Proprietor: Canon Kabushiki Kaisha, Tokyo 146-8501 (JP)
(72) Inventor: Kobashi, Kazufumi, Tokyo 146-8501 (JP)
(74) Representative: TBK

(56) References cited:
- JP-A- 2002 320 082
- JP-A- 2004 222 309
- US-A1- 2002 156 923
- US-A1- 2004 160 629
- US-A1- 2005 275 871
- US-A1- 2006 051 149
- US-A1- 2009 059 296
- US-A1- 2009 273 799
- US-A1- 2010 079 781
- US-A1- 2011 040 813
- US-B1- 6 594 351
- CANON ET AL: "White Paper DPOF Version 1.10", INTERNET CITATION, 17 July 2000 (2000-07-17), pages 1-7, XP002533874, Retrieved from the Internet: URL:http://panasonic.jp/dc/dpof_110/white_ e.pdf [retrieved on 2009-06-24]

## Description

### BACKGROUND OF THE INVENTION

### Field of the Invention

The present invention relates to an information processing system that can perform facsimile transmission and an information processing apparatus that can request an external apparatus to perform the facsimile transmission.

### Description of the Related Art

A conventional personal computer (PC) connected to a multifunction peripheral (MFP) having a facsimile communication function can request the MFP to perform facsimile transmission (refer to Japanese Patent Application Laid-Open No. 2005-333447). More specifically, a user operates a facsimile driver installed in the PC so that the facsimile driver notifies the MFP of a facsimile number of a destination and data to be transmitted. The MFP that has received the notification performs the facsimile transmission according to an instruction from the facsimile driver.

Further, as to a user's operation when the facsimile transmission is performed, for the purpose of simplifying destination specification and preventing erroneous transmission caused by erroneously specifying the destination, it is known that the facsimile number of the destination is previously input to the data to be facsimile-transmitted (refer to Japanese Patent Application Laid-Open No. 05-176093) . More specifically, if the facsimile number is previously input in a previously determined region of the data to be facsimile-transmitted, when the facsimile transmission is performed, the facsimile number is automatically set by referring to the predetermined region.

Conventionally, when the PC requests the MFP to perform the facsimile transmission as described in Japanese Patent Application Laid-Open No. 2005-333447, the user takes much work to input the facsimile number of the destination. To address such a problem, as described in Japanese Patent Application Laid-Open No. 05-176093, if the facsimile number of the destination is previously input into the data to be transmitted, the user can skip inputting the facsimile number of the destination.

However, in the case of Japanese Patent Application Laid-Open No. 05-176093, a special region for inputting the facsimile number must be provided at a header portion of the data, thereby lacking in generality.

On the other hand, some general data storage regions (libraries) can store the facsimile number as a property item of the data. However, what kind of property item is to be applied to the data varies depending on each storage region. Therefore, when the data stored in a plurality of different storage regions is treated as the data to be facsimile-transmitted, it cannot be correctly specified which property item stores the facsimile number to be used as the destination. Thus, when transmitting the data, the user cannot help but manually specify the facsimile number, thereby taking much time.

Further, the documents US 2009/059296 A1 and US 2002/156923 A1 both relate to improving a facsimile operation in terms of efficiency of user operation, wherein transmission condition information including a destination facsimile number is stored together with image data transmitted by facsimile transmission, the stored transmission condition information is read out, and the read-out transmission condition information is used for re-transmission of image data.

Still further, the document US 2009/0273799 A1 discloses an image forming apparatus which associates specific folders, which are set for specific setting items, with a specific file, and performs operations on the specific file according to the settings of the specific folders. The image forming apparatus includes an associating unit that associates a file having setting on its own file with one of the specific folders, and a setting contents substituting unit that substitutes setting contents of the specific folder with setting contents of the own file.

### SUMMARY OF THE INVENTION

The present invention is directed to a technique for reducing a work for inputting a facsimile number of a destination when performing facsimile transmission by selecting data stored in a plurality of storage regions.

According to a first aspect of the present invention, there is provided an information processing system as specified in claims 1 to 4. According to a second aspect of the present invention, there is provided an information processing apparatus as specified in claims 5 to 10. According to a third aspect of the present invention, there is provided a method as specified in claims 11 and 12. According to a fourth aspect of the present invention, there is provided a program as specified in claim 13.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.

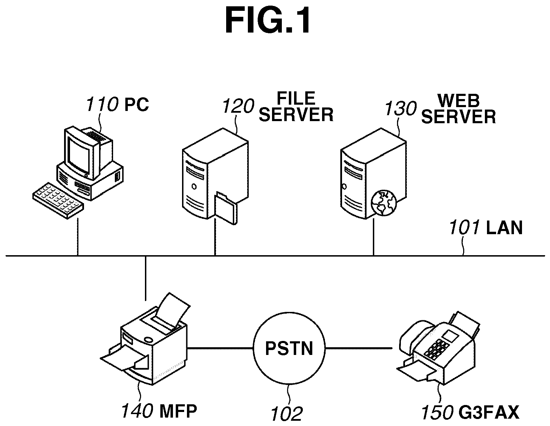

Fig. 1 illustrates an overall information processing system according to an exemplary embodiment of the present invention.
Fig. 2 is a block diagram illustrating a hardware structure of a personal computer (PC) according to an exemplary embodiment of the present invention.
Fig. 3 is a block diagram illustrating a hardware structure of an MFP according to an exemplary embodiment of the present invention.
Fig. 4 is a block diagram illustrating a software structure of a PC according to an exemplary embodiment of the present invention.
Fig. 5 illustrates an example of a screen of an integrated application according to an exemplary embodiment of the present invention.
Fig. 6 illustrates an example of a screen of an integrated application according to an exemplary embodiment of the present invention.
Fig. 7 illustrates an example of a screen of an integrated application according to an exemplary embodiment of the present invention.
Fig. 8 illustrates an example of setting information about an output icon according to an exemplary embodiment of the present invention.
Fig. 9 is a flowchart illustrating a series of processing performed by a PC according to an exemplary embodiment of the present invention.
Fig. 10 is an example of a screen of an integrated application according to an exemplary embodiment of the present invention.

### DESCRIPTION OF THE EMBODIMENTS

Various exemplary embodiments, features, and aspects of the invention will be described in detail below with reference to the drawings.

A PC 110 can be connected to a local area network (LAN) 101 to communicate with an external device via the LAN 101. A file server 120, a web server 130, and an MFP 140 are connected to the LAN 101. The MFP 140 is connected to a G3 type facsimile apparatus (G3FAX) 150 via a public switched telephone networks (PSTN) to perform a facsimile communication.

As described below, the PC 110 can request the MFP 140 to facsimile-transmit data stored in the PC 110 or the data stored in the file server 120 or the web server 130. Herein, a case is described in which only one MFP is connected. However, a plurality of MFPs having the same structure as that of the MFP 140 may be connected to the LAN 101. In this case, the user operating the PC 110 needs to select the MFP which the PC 110 requests to perform the facsimile transmission.

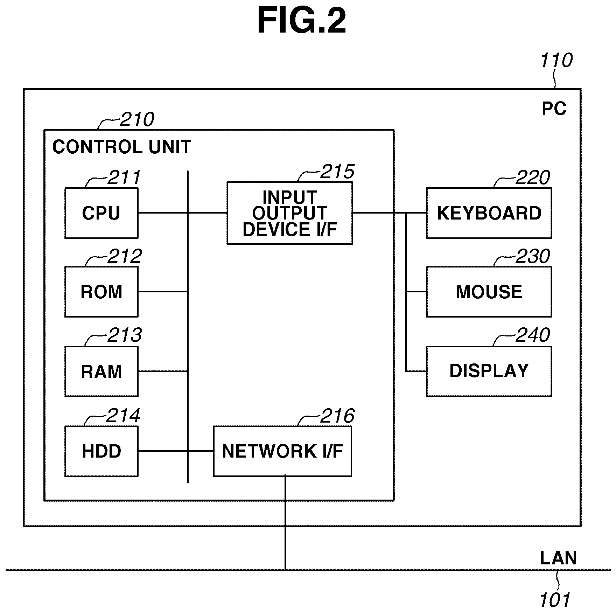

Fig. 2 is a block diagram illustrating a hardware structure of the PC 110. A control unit 210 including a central processing unit (CPU) 211 controls an overall operation performed by the PC 110. The CPU 211 reads a control program stored in a read only memory (ROM) 212 to execute various kinds of control processing. A random access memory 213 is used as a main memory for the CPU 211 or a temporary storage region of a work area. A hard disk drive (HDD) 214 stores image data or various kinds of programs. An input/output device interface (I/F) 215 connects a keyboard 220, a mouse 230, and a display 240 to the control unit 210.

A network I/F 216 connects the control unit 210 (PC 110) to the LAN 101. The network I/F 216 controls communication with the external device (e.g., the MFP 140) via the LAN 101.

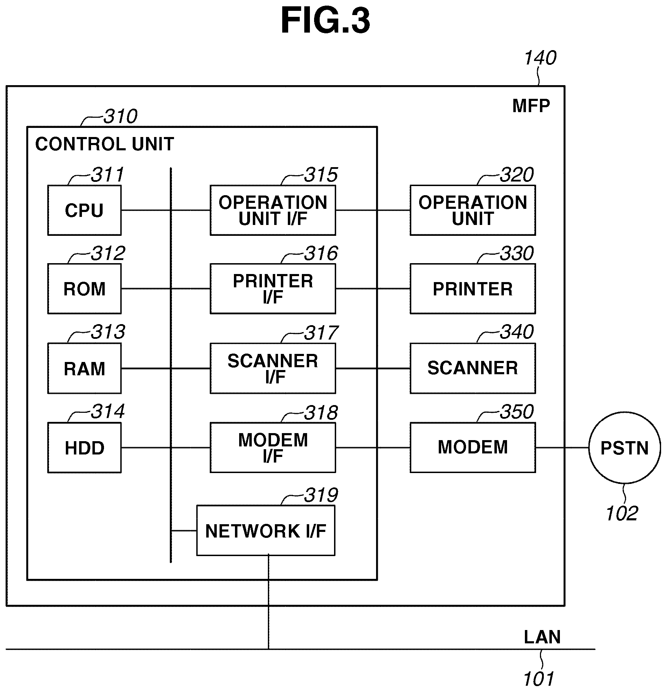

Fig. 3 is a block diagram illustrating a hardware structure of the MFP 140. A control unit 310 including a CPU 311 controls an overall operation of the MFP 140. The CPU 311 reads the control program stored in a ROM 312 to execute various kinds of control processing such as reading control and transmission control. The RAM 313 is used as a main memory for the CPU 311 and a temporary storage region of a work area. An HDD 314 stores image data, various kinds of programs, or various kinds of information tables described below.

An operation unit I/F 315 connects an operation unit 320 and the control unit 310. The operation unit 320 includes a liquid display unit having a touch panel function and a keyboard. A printer I/F 316 connects a printer 330 and the control unit 310. The image data to be printed by the printer 330 is transferred from the control unit 310 to the printer 330 via the printer I/F 316, and then printed on a recording medium by the printer 330.

A scanner I/F 317 connects a scanner 340 and the control unit 310. The scanner 340 reads an image on an original to generate image data, and then inputs the image data into the control unit 310 via the scanner I/F 317.

A modem I/F 318 connects a modem 350 and the control unit 310. The MFP 140 is connected to the PSTN 102 via the modem 350, and can perform the facsimile transmission with the G3FAX 150 according to control by the modem 350.

A network I/F 319 connects the control unit 310 (MFP 140) to the LAN 101. The network I/F 319 transmits the image data that has been facsimile-received to the external device (e.g., the PC 110, file server 120, and web server 130) on the LAN 101. Further, the network I/F 319 receives various kinds of information (e.g., request of facsimile transmission) from the external device (e.g., the PC 110) on the LAN 101.

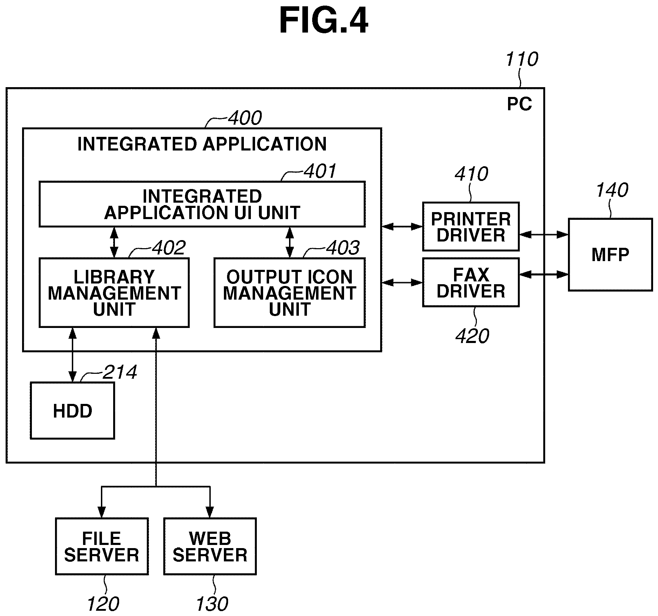

Fig. 4 is a block diagram illustrating a software structure of the PC 110. In the PC 110, a predetermined operating system (OS) is installed and various kinds of applications for performing special function processing are also installed. The special function processing includes document processing, table calculation processing, presentation processing, image processing, and graphic processing. Each application has its own unique data structure (file structure) . Further, the OS can give a print instruction to the corresponding application referring to an identifier of each file.

Furthermore, in the PC 110, an integrated application 400 is installed that integrates and manages various kinds of functions on a desktop. The integrated application 400 has functions for improving facsimile operation, cutting a print cost, improving an operation for digitalizing paper, operating an approval by a digital document, and sharing information.

According to the present exemplary embodiment, descriptions will be given focusing on the function for improving a facsimile operation which the integrated application 400 has. The integrated application 400 has a function for requesting the external apparatus (the MFP 140) to facsimile-transmit optional data via a facsimile driver 420. Further, the integrated application 400 includes a function for managing the data that has been facsimile-received by the MFP 140 via the PSTN 102. At this point, a facsimile number of the transmission source of the data is given to the received data as the property information.

Further, the integrated application 400 has a function for, when the received data is to be returned to the facsimile number of the transmission source as a destination, automatically acquiring the facsimile number thereof given as the property information about the data and setting the facsimile number as the destination. The case where the received data is to be returned to the facsimile number of the transmission source as the destination is conceivable when, for example, an order form is received from an order source and the order form is sent back to the order source as a copy to which a description of reception of the order is added.

However, items of the property information given to the received data may vary depending on the library in which the data is stored. In such a case, since, of a plurality of property items given to the data to be transmitted, which property item stores the facsimile number cannot be specified, acquiring the facsimile number is difficult.

According to the present exemplary embodiment, particularly, a system will be described, in which, when optional data is selected from among the data stored in a plurality of libraries and facsimile-transmitted, the facsimile number of the destination is automatically acquired.

Fig. 4 illustrates software or hardware mainly related to the integrated application 400 to conceptually illustrate acquisition processing of the above-described facsimile number. The integrated application 400, a printer drive 410, and the facsimile driver 420 are installed in the HDD 214 as a system application. The integrated application 400 includes an integrated application user interface (UI) unit 401, a library management unit 402, and an output icon management unit 403.

The integrated application UI unit 401 establishes a user interface for operating the integrated application 400 and receives various kinds of input operations from the user. The library management unit 402 manages (in other words, holds identification information of a storage region) the storage region (library) for storing data (document data and image data), and processes access to each library and an operation on the data stored in each library.

Herein, the following three libraries are managed by the library management unit 402. The first one is a local library using the HDD 214 inside the PC 110 as the storage region. The local library can be used by only the user who uses the integrated application 400.

The second one is a Server Message Block (SMB) library that corresponds to a server message block (SMB) protocol and uses the file server 120 having an SMB server function as the storage region. If the user has an access right to the file server 120, each user can share the SMB library by defining the SMB library as the library on the integrated application 400.

The third one is a web server library that corresponds to a Hyper Text Transfer Protocol (HTTP) and uses the web server 130 having a web server function as the storage region. The web server library performs communication using a web service prepared by document management software installed at the web server 130 side, and performs various kinds of operations on the data. If the user is managed by software at the web server 130 side, each user can share the web server library by defining the web server library as the library on the integrated application 400.

The output icon management unit 403 manages and stores information about an output icon registered with the integrated application 400. The output icon includes information about a link to the printer drive 410 and the facsimile driver 420 that are installed in the PC 110. One icon is associated with one driver or one of other applications.

The printer drive 410 is software for controlling a print function of the MFP 140, and transmits print data to the MFP 140 and causes the printer 330 to perform print processing. The facsimile driver 420 is software for controlling a facsimile function of the MFP 140, and transmits facsimile transmission data to the MFP 140 and performs facsimile transmission processing using the modem 350.

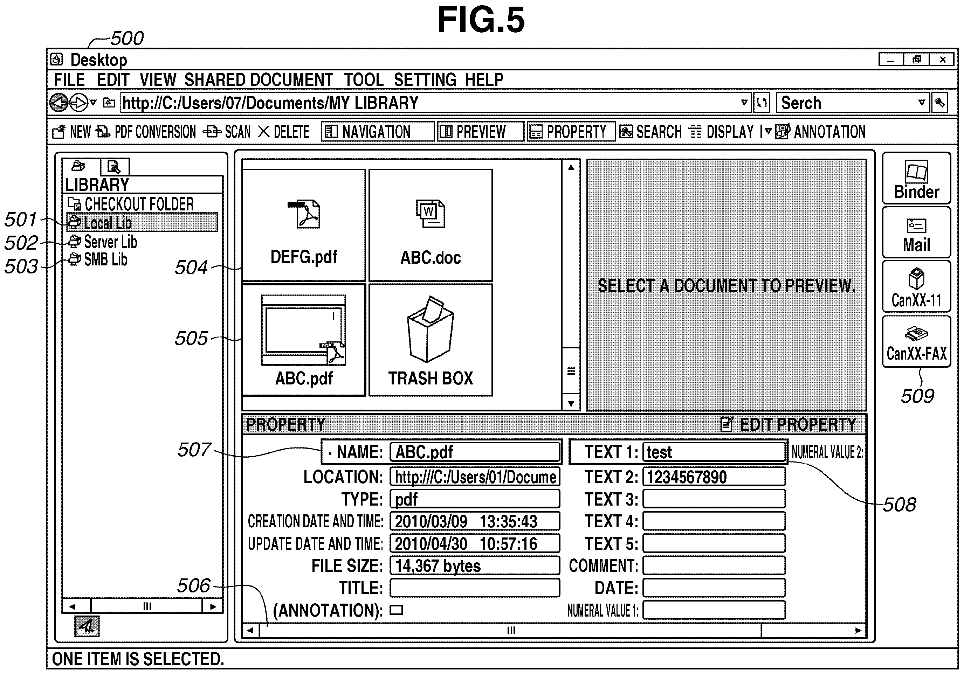

Fig. 5 illustrates an example of a user interface of the integrated application 400, which is a main window of the integrated application 400. A screen illustrated in Fig. 5 and each screen described below are generated in the integrated application UI unit 401 and displayed on the display 240 of the PC 110.

An icon 501 is used to select a local library and displayed when the local library is registered with the integrated application 400. An icon 502 is used to select the web server library and displayed when the web server library is registered with the integrated application 400. An icon 503 is used to select the SMB library and displayed when the SMB library is registered with the integrated application 400.

A file list pane 504 displays data (file and folder) stored in the storage region (library) selected by the user. A pane 505 indicates that "ABC.pdf" is selected from among the files displayed in the file list pane 504.

A property pane 506 displays property information given to the file and folder that are selected. The property information includes the item (e.g., ABC.pdf., January 1, 500 kilo bytes (Kbyte)) and a value (e.g., NAME, DATA, and SIZE) for each item. A field 507 indicates that a value of "ABC.pdf" is set for the property item having a name of "NAME". Likewise, a field 508 indicates that a value of "test" is set for the property item having a name of "TEXT 1".

The property item that can be set is defined for each library and varies depending on the function of the library. For example, in the case of the local library, the same property item as that capable of being set by a file system of the OS is given to the data. On the other hand, in the case of the web server library, the property item freely customized by the setting at the web server 130 side is given to the data. The library management unit 402 manages the property item given to the data in each library and serves a function for returning the property item and its value to the integrated application UI unit 401 according to selection of the library.

An output icon 509 is registered with the integrated application 400. The output icon 509 includes the information about a link to the facsimile driver 420. When the output icon 509 is pressed with any one of files selected in the file list pane 504, the MFP 140 is requested to facsimile-transmit the selected file via the facsimile driver 420. By dragging and dropping the selected file onto the output icon 509, the facsimile transmission of the selected file can be instructed.

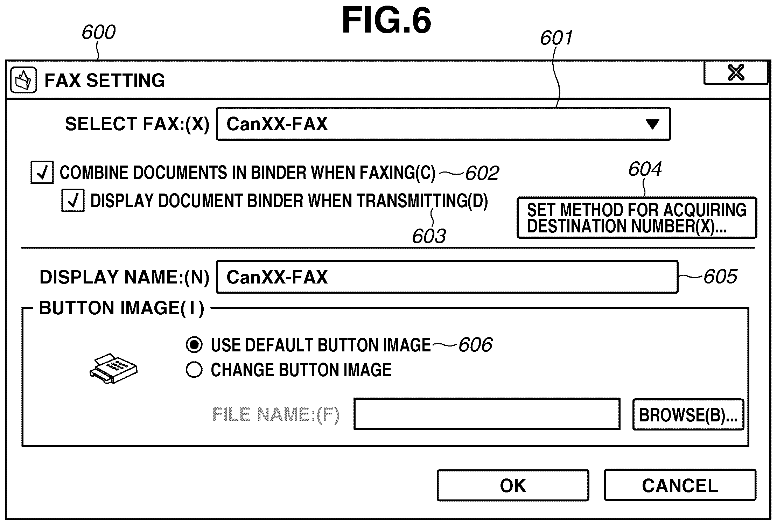

Fig. 6 illustrates a screen for setting the output icon 509. A screen 600 illustrated in Fig. 6 can be displayed with a menu item or a tool button of the integrated application 400.

In a field 601, a driver from various drivers or an application of a link destination is selected. In a field 602, when a plurality of files selected in the file list pane 504 are facsimile-transmitted, whether to be bound and transmitted as one file is specified. In a field 603, when a plurality of files selected in the file list pane 504 are facsimile-transmitted, whether to display a screen for instructing editing in detail is specified before the transmission.

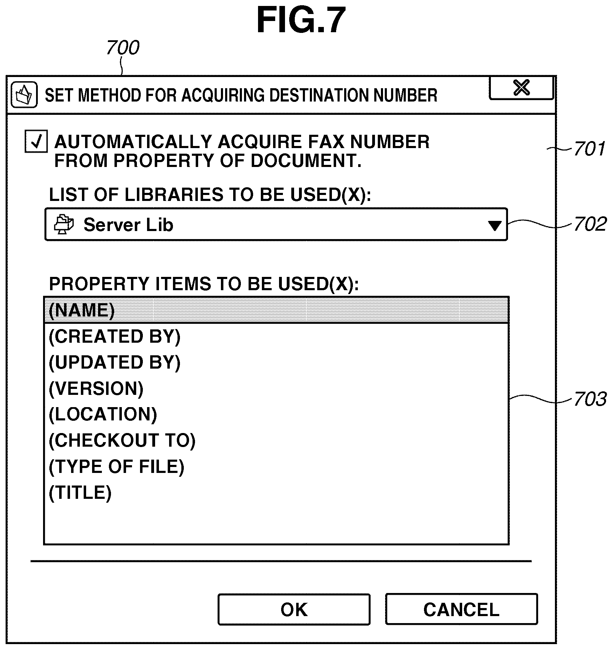

When a button 604 is pressed, a method for acquiring the facsimile number, which is to be the destination of the facsimile transmission, can be set (details will be described with reference to Fig. 7 below). In fields 605 and 606, a name of the output icon and a display image thereof are each set.

Fig. 7 illustrates a screen for setting a method for acquiring the facsimile number. A screen 700 illustrated in Fig. 7 is displayed when the button 604 illustrated in Fig. 6 is pressed. In a field 701, it is specified whether to automatically acquire the facsimile number of the destination from the data to be transmitted. When it is specified to automatically acquire the facsimile number in the field 701, further specification performed in fields 702 and 703 is necessary. As described above, since the property item given to the data varies depending on each library, in order to specify the property item, it is necessary to specify the library in the field 702 first.

When the library is selected in the field 702, the property items given to the data in the selected library are displayed in a list in the field 703. From the list, the user selects an optional property item and presses an OK button to complete the setting. With this arrangement, one output icon (this output icon serves a function as special information for specifying the MFP 140 and the facsimile driver 420 therefor), the selected library, and the property item are associated with one another to be registered.

In the case where it is specified to automatically acquire the facsimile number in the field 701, only when the data stored in the library selected in the field 702 is facsimile-transmitted, a value of the property item selected in the field 703 is automatically acquired as the facsimile number of the destination. On the other hand, when the data stored in the library other than that selected in the field 702 is facsimile-transmitted, the facsimile number is not automatically acquired. Although only one library can be selected for one output icon herein, a plurality of libraries can be selected, and then the property item may be selected for each library.

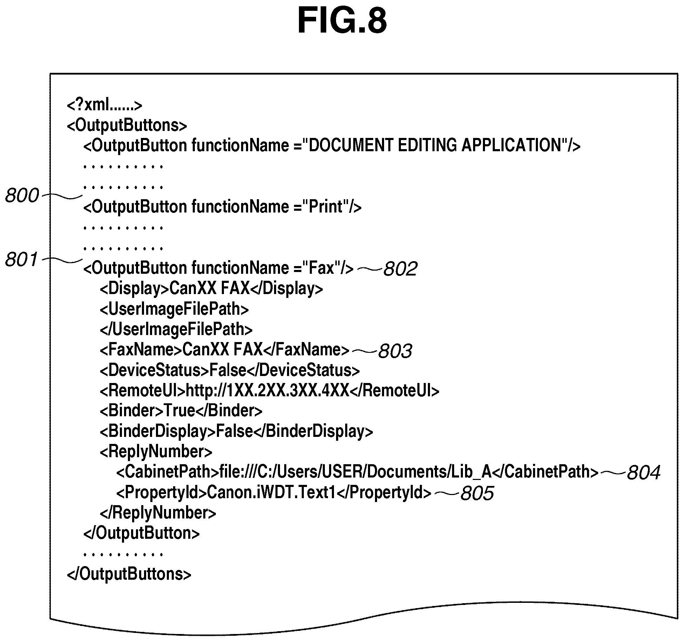

Fig. 8 illustrates an example of the setting information about the output icon set by the above-described method. The setting information is stored in a file format such as Extensible Markup Language (XML) format and defines a setting value for each icon.

The output icon management unit 403 refers to this setting information file and returns the information about the output icon to the integrated application UI unit 401. A tag 800 indicates definitions of all output icons, and the setting of all icons registered with the integrated application 400 is written in this tag. A tag 801 defines one output icon having the information about a link to the facsimile driver 420.

A tag 802 indicates a type of the output icon and includes a value of "Fax" for the icon having the information about a link to the facsimile driver 420. A tag 803 indicates a facsimile driver name of a link destination. Tags 804 and 805 indicate the setting about whether to automatically acquire the above-described facsimile number. When the value is included, it is determined that automatically acquiring is set.

The tag 804 indicates the library selected in the field 702 illustrated in Fig. 7. The tag 805 indicates identification (ID) of the property item selected in the field 703 illustrated in Fig. 7. The ID of the property item managed herein is different from the name of the property item displayed in the field 703 illustrated in Fig. 7. However, the name of the property item itself may be used as the ID.

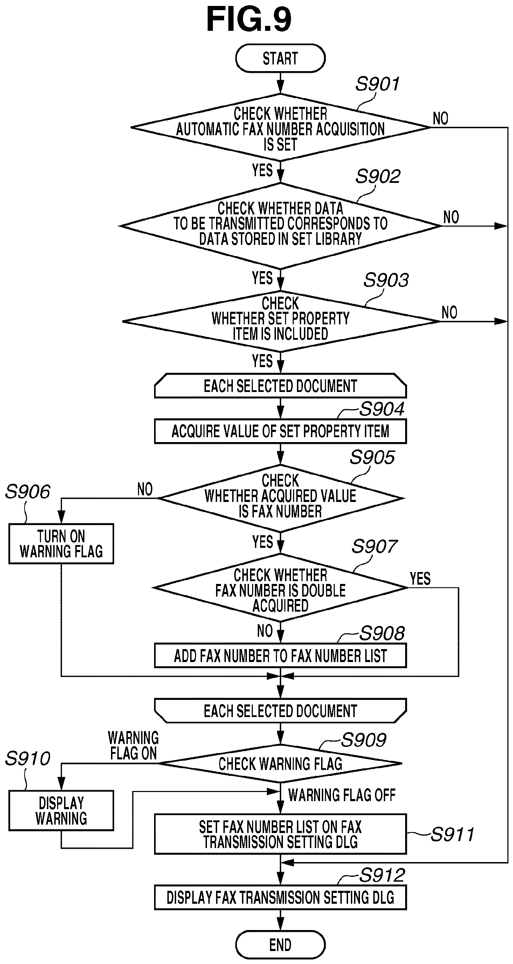

Fig. 9 is a flowchart illustrating a series of processing in which the integrated application 400 automatically acquires the facsimile number of the destination. Each operation illustrated by the flowchart in Fig. 9 can be realized when the CPU 211 of the PC 110 executes the control program. Further, the flowchart illustrated in Fig. 9 is started by being triggered by an operation in which the file to be facsimile-transmitted is selected with the file list pane 505, and the output icon 509 having the information about a link to the facsimile driver 420 is pressed. Further, when the file selected with the file list pane 505 is dragged and dropped onto the output icon 509, likewise, the flowchart is started.

In step S901, the CPU 211 determines whether automatically acquiring the facsimile number is set for the selected output icon. The output icon management unit 403 refers to the setting information file illustrated in Fig.8 and checks whether tags 804 and 805 are included. When the tags are included (YES in step S901), the CPU 211 determines that automatically acquiring the facsimile number is set, and the processing proceeds to step S902. On the other hand, when the tags are not included (NO in step S901), the CPU 211 determines that the automatically acquiring the facsimile number is not set, and the processing proceeds to step S912, which will be described below.

In step S902, the CPU 211 determines whether the data selected to be transmitted is stored in the library indicated with the tag 804. In this determination, the CPU 211 checks whether the library path of the data selected with the file list pane 505 corresponds to the library path indicated with the tag 804 of the setting information file acquired from the output icon management unit 403. When the library paths correspond to each other (YES in step S902), the processing proceeds to step S903. On the other hand, when the library paths do not correspond to each other (NO in step S902), the processing proceeds to step S912, which will be described below.

In step S903, the CPU 211 determines whether the library that stores the data and is selected to be transmitted includes the property item set as an acquisition source of the facsimile number. In this determination, the CPU 211 acquires a list of the property items included in the library from the library management unit 402 based on the library path of the data selected with the file list pane 505. Then, the CPU 211 checks whether the property item indicated with the tag 805 of the setting information file acquired from the output icon management unit 403 is included in the above-described list of the property items. When the property item is included (YES in step S903), the processing proceeds to step S904. On the other hand, when the property item is not included (NO in step S903), the processing proceeds to step S912, which will be described below. When the libraries do not correspond to each other in step S902, or when the property item is not included in step S903, a warning for each case may be displayed.

In steps S904, S905, S906, S907, and S908, processing is performed on each data selected with the file list pane 505. In step S904, the CPU 211 acquires from the library management unit 402 a value of the property item indicated by the tag 805, of the property items given to object data (first data).

In step S905, the CPU 211 checks whether the value of the property item acquired in step S904 is the facsimile number. Numeral values from 0 to 9, a part of symbols, and alphabets can be used as the facsimile number. Further, since the value stored in the property item may include symbols such as parentheses "(" and ")", the determination is made based on whether the value of the property item acquired in step S904 is included within a code range of the ASCII character code of 0×20 to 0×7e. Further, it is also checked whether a character length of the value of the property item acquired in step S904 is longer than the number of default bytes (defined as 45 bytes) .

When the entire value of the property item is within the range of the character code and the number of default bytes (YES in step S905), the CPU 211 determines that the value indicates the facsimile number, and the processing proceeds to step S907. On the other hand, when even one character of the value of the property item is out of the range of the code (NO in step S905), the CPU 211 determines the value does not indicate the facsimile number, and the processing proceeds to step S906. The determination processing of the facsimile number is not necessarily performed within the above-described range of the character code, but may be performed by widening (or narrowing) the range of the character code according to the characteristics of the system. Likewise, the number of the default bytes may be changed according to the characteristics of the system.

In step S906, the CPU 211 turns on a flag for displaying a warning message (warning flag is set to off as a default). If a plurality of files are selected with the file list pane 505, it is inconvenient for the user to display the warning message for each file. Thus, the warning flag is prepared and the warning is displayed at a final stage. When processing for turning the warning on is completed, the processing proceeds to next processing. When the processing in steps S904, S905, S906, S907, and S908 have been completed on all files selected with the file list pane 505, the processing proceeds to step S909. When not completed, the processing on the second data proceeds to step S904, and the processing is repeatedly performed until being completed on all files.

In step S907, the CPU 211 performs a duplication check on the facsimile number acquired in step S904 and the facsimile number stored in the facsimile number list describes below. This is in order to, when a plurality of files are selected with file list pane 505 and the same facsimile number is included in each property item, avoid a plurality of numbers of the same facsimile numbers from being selected. For checking the double facsimile numbers, a character string except for the parentheses "(" and ")" and the hyphen (-) included in the value of the facsimile number is checked. This is because, since the parentheses "(" and ")" and the hyphen (-) may or may not be used for the area code and separation of the numbers, the duplication check for the facsimile numbers is to be performed on only a part of numerals of the facsimile number.

When the facsimile number list does not include double facsimile numbers (NO in step S907), the processing proceeds to step S908. When the facsimile number list double includes the facsimile number (YES in step S907), the processing skips step S908 and proceeds to next processing.

In step S908, the CPU 211 adds the facsimile number acquired in step S904 to the facsimile number list. The facsimile number list is a list region for creating on a memory while the flowchart is being performed and is also used to temporarily store the acquired facsimile number. The CPU 211 adds to the facsimile number list the facsimile number that is acquired in step S904, determined as the facsimile number in step S905, and determined not to be included double in step S907.

In step S909, the CPU 211 checks a state of the above-described warning flag. The CPU 211 checks whether the warning flag is turned on or off. When it is turned on (WARNING FLAG ON in step S909), the processing proceeds to step S910. When it is turned off (WARNING FLAG OFF in step S909), the processing proceeds to step S911.

In step S910, the CPU 211 displays a warning indicating that the value of the property item that cannot be identified as the facsimile number has been acquired in any one of the files selected with the file list pane 505 in step S905.

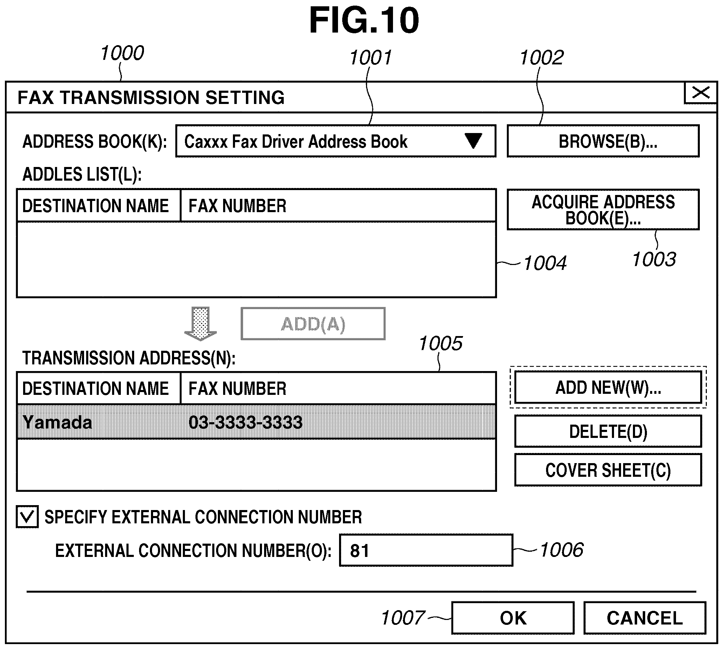

In step S911, the CPU 211 sets the facsimile number list to which the facsimile number is added in step S908 on the facsimile transmission setting dialog (DLG) (screen illustrated in Fig. 10 described below). The facsimile transmission setting DLG is a screen displayed via the integrated application UI unit 401 and a dialog for performing various kinds of settings for the facsimile transmission. The facsimile transmission setting DLG will be described below.

In step S912, the CPU 211 displays the facsimile number setting DLG in which the facsimile number list is set in step S911.

Fig. 10 illustrates an example of the facsimile transmission setting DLG 1000. In this dialog, the destination facsimile number for the facsimile transmission is specified to perform processing for transmitting the facsimile transmission job to the facsimile driver 420.

In a field 1001, when specifying the facsimile number of the destination by browsing an address book, the address book to be browsed is selected. When a button 1002 is pressed, the address book registered with the facsimile driver 420 can be browsed. When the button 1003 is pressed, the address book registered with the MFP 140 can be browsed. In the field 1004, destination information (facsimile number) included in the address book selected in the field 1001 is displayed in a list.

A list box 1005 displays a list of the facsimile numbers of the destinations. The facsimile numbers included in the facsimile number list set in step S911 are displayed in a list in the field 1001 as a default when the dialog is displayed. With this arrangement, the value of the property item set as an acquisition source of the facsimile number can be automatically set as the facsimile number of the destination, thus increasing efficiency of a setting operation by the user.

Further, by the above-described processing performed in steps S905 and S907, the setting is performed in a state where an incorrect facsimile number or double included facsimile numbers are eliminated, thereby further increasing efficiency of the setting operation by the user. Furthermore, the facsimile number displayed in a list as a default can be changed or deleted in this dialog. Moreover, the different facsimile number can be newly added as the destination in this dialog. With this arrangement, even when the automatically set facsimile number is the value that is not intended, the facsimile number can be corrected, thereby preventing an erroneous transmission.

When a negative determination result is acquired in any one of steps S901, S902, and S903, or when no facsimile number is included in the facsimile number list set in step S911, the dialog including no facsimile number in the list box 1005 is displayed.

A text control 1006 fixedly specifies an external connection number. For example, if the facsimile number needs to be started with "81" for the facsimile transmission, "81" is input into the text control 1006 to be added to the facsimile number of the destination specified in the list box 1001 when the facsimile transmission is performed.

When an OK button 1007 is pressed, the facsimile number displayed in a list in the list box 1005 is specified as a destination, and the facsimile transmission job is transmitted to the facsimile driver 420. Subsequently, the facsimile transmission is requested from the facsimile driver 420 to the MFP 140 and the facsimile transmission is performed via the MFP 140.

The structure is described as above as an example in which the performance of the facsimile transmission is requested from the PC 110 to the MFP 140 via the facsimile driver 420. However, the present invention may be applied to another structure. For example, a function included in the PC 110 can be added to the MFP 140 so that the above-described series of processing can be performed in the single apparatus.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

An information processing system capable of performing facsimile transmission registers a specified storage region included in a plurality of storage regions for storing data and a specified property item given to data stored in the specified storage region, selects data to be facsimile-transmitted from among a plurality of pieces of data stored in the plurality of storage regions, and determines whether the selected data is the data stored in the specified storage region. When it is determined that the selected data is the data stored in the specified storage region, the information processing system acquires a value of the specified property item given to the selected data, and sets the acquired value as the facsimile number of the destination.

## Claims

1. An information processing system capable of performing facsimile transmission of data being stored in a plurality of libraries, wherein property items, including a property item having a facsimile number as value, which are given to respective data, may vary depending on the library in which the respective data is stored, the information processing system comprising:
display means (240; 703) for displaying a screen for enabling a user to select a specific library among the plurality of libraries and to select, for the specific library, one property item, as a property item from which a facsimile number is to be acquired, among the plurality of property items given to the data being stored in the specific library;
registration means (400; 804, 805) for registering the selected property item in association with the specific library among the plurality of libraries;
selection means (240; 504) for selecting data to be facsimile-transmitted from among the data being stored in the plurality of libraries;
determination means (211; S902) for determining whether the data selected by the selection means is data being stored in the specific library for which an association with the selected property item is registered;
acquisition means (211; S904) for, when the determination means determines that the selected data is data being stored in the specific library for which an association with the selected property item is registered, automatically acquiring a value of the registered property item among the plurality of property items given to the data being stored in the specific library; and
setting means (211; S911) for setting the value acquired by the acquisition means as a destination facsimile number of the selected data.

2. An information processing system according to claim 1, wherein the selected property item is used for storing a facsimile number of a transmission source when the selected data has been received.

3. An information processing system according to claim 1, wherein the display means is adapted to display the value acquired by the acquisition means.

4. An information processing system according to claim 3, wherein, when the determination means determines that the selected data is data not being stored in the specific library, the value of the registered property item is not displayed by the display means.

5. An information processing apparatus (110) capable of requesting an external device (140) to perform facsimile transmission of data being stored in a plurality of libraries, wherein property items, including a property item having a facsimile number as value, which are given to respective data, may vary depending on the library in which the respective data is stored, the information processing apparatus comprising:
display means (240; 703) for displaying a screen for enabling a user to select a specific library among the plurality of libraries and to select, for the specific library, one property item, as a property item from which a facsimile number is to be acquired, among the plurality of property items given to the data being stored in the specific library;
registration means (400; 804, 805) for registering the selected property item in association with the specific library among the plurality of libraries;
selection means (240; 504) for selecting data to be facsimile-transmitted from among the data being stored in the plurality of libraries;
determination means (211; S902) for determining whether the data selected by the selection means is data being stored in the specific library for which an association with the selected property item is registered;
acquisition means (211; S904) for, when the determination means determines that the selected data is data being stored in the specific library for which an association with the selected property item is registered, automatically acquiring a value of the registered property item among the plurality of property items given to the data being stored in the specific library; and
request means (420) for requesting the external device to facsimile-transmit the selected data to a facsimile number indicated by the value acquired by the acquisition means as a destination.

6. An information processing apparatus according to claim 5, wherein the selected property item is used for storing a facsimile number of a transmission source when the selected data has been received.

7. An information processing apparatus according to claim 5, wherein the plurality of libraries include a library (214) included inside the information processing apparatus and a library (120, 130) outside thereof.

8. An information processing apparatus according to claim 5, wherein the registration means is adapted to register the selected property item in association with the external device.

9. An information processing apparatus according to claim 8, wherein the registration means is adapted to register the selected property item in association with a facsimile driver for controlling a facsimile function of the external device.

10. An information processing apparatus according to claim 9, wherein the registration means is adapted to register the selected property item in association with specification information for specifying the facsimile driver.

11. A method for controlling an information processing system capable of performing facsimile transmission of data being stored in a plurality of libraries, wherein property items, including a property item having a facsimile number as value, which are given to respective data, may vary depending on the library in which the respective data is stored, the method comprising:
displaying (703) a screen for enabling a user to select a specific library among the plurality of libraries and to select, for the specific library, one property item, as a property item from which a facsimile number is to be acquired, among the plurality of property items given to the data being stored in the specific library;
registering (804, 805) the selected property item in association with the specific library among the plurality of libraries;
selecting data to be facsimile-transmitted from among the data being stored in the plurality of libraries;
determining (S902) whether the selected data is data being stored in the specific library for which an association with the selected property item is registered;
automatically acquiring (S904), when it is determined that the selected data is data being stored in the specific library for which an association with the selected property item is registered, a value of the registered property item among the plurality of property items given to the data being stored in the specific library; and
setting (S911) the acquired value as a destination facsimile number of the selected data.

12. A method for controlling an information processing apparatus (110) capable of requesting an external device (140) to perform facsimile transmission of data being stored in a plurality of libraries, wherein property items, including a property item having a facsimile number as value, which are given to respective data, may vary depending on the library in which the respective data is stored, the method comprising:
displaying (703) a screen for enabling a user to select a specific library among the plurality of libraries and to select, for the specific library, one property item, as a property item from which a facsimile number is to be acquired, among the plurality of property items given to the data being stored in the specific library;
registering (804, 805) the selected property item in association with the specific library among the plurality of libraries;
selecting data to be facsimile-transmitted from among the data being stored in the plurality of libraries;
determining (S902) whether the selected data is data being stored in the specific library for which an association with the selected property item is registered;
automatically acquiring (S904), when it is determined that the selected data is data being stored in the specific library for which an association with the selected property item is registered, a value of the registered property item among the plurality of property items given to the data being stored in the specific library; and
requesting the external device to facsimile-transmit the selected data to a facsimile number indicated by the acquired value as a destination.

13. A program for causing a computer to perform the method according to claim 11 or 12.

## Patentansprüche

1. Informationsverarbeitungssystem, das zur Durchführung einer Faxübertragung von Daten imstande ist, die in einer Vielzahl von Bibliotheken gespeichert sind, wobei Eigenschaftselemente, umfassend ein Eigenschaftselement mit einer Faxnummer als Wert, die jeweiligen Daten zugeordnet sind, abhängig von der Bibliothek variieren können, in denen die jeweiligen Daten gespeichert sind, wobei das Informationsverarbeitungssystem aufweist:
eine Anzeigeeinrichtung (240; 703) zum Anzeigen eines Bildschirms, um einem Benutzer zu ermöglichen, eine spezifische Bibliothek unter der Vielzahl von Bibliotheken auszuwählen und, für die spezifische Bibliothek, ein Eigenschaftselement, als ein Eigenschaftselement, von dem eine Faxnummer zu erfassen ist, unter der Vielzahl von Eigenschaftselementen auszuwählen, die den in der spezifischen Bibliothek gespeicherten Daten zugeordnet sind;
eine Registrierungseinrichtung (400; 804, 805) zum Registrieren des ausgewählten Eigenschaftselements in Zusammenhang mit der spezifischen Bibliothek unter der Vielzahl von Bibliotheken;
eine Auswahleinrichtung (240; 504) zum Auswählen von Daten, die einer Faxübertragung zu unterziehen sind, aus den Daten, die in der Vielzahl von Bibliotheken gespeichert sind;
eine Bestimmungseinrichtung (211; S902) zum Bestimmen, ob die durch die Auswahleinrichtung ausgewählten Daten Daten sind, die in der spezifischen Bibliothek gespeichert sind, für die ein Zusammenhang mit dem ausgewählten Eigenschaftselement registriert ist;
eine Erfassungseinrichtung (211; S904) zum, wenn die Bestimmungseinrichtung bestimmt, dass die ausgewählten Daten Daten sind, die in der spezifischen Bibliothek gespeichert sind, für die ein Zusammenhang mit dem ausgewählten Eigenschaftselement registriert ist, automatischen Erfassen eines Werts des registrierten Eigenschaftselements unter der Vielzahl von Eigenschaftselementen, die den in der spezifischen Bibliothek gespeicherten Daten zugeordnet sind; und
eine Einstelleinrichtung (211; S911) zum Einstellen des durch die Erfassungseinrichtung erfassten Werts als eine Zielfaxnummer der ausgewählten Daten.

2. Informationsverarbeitungssystem gemäß Anspruch 1, wobei das ausgewählte Eigenschaftselement zum Speichern einer Faxnummer einer Sendequelle verwendet wird, wenn die ausgewählten Daten empfangen wurden.

3. Informationsverarbeitungssystem gemäß Anspruch 2, wobei die Anzeigeeinrichtung angepasst ist zum Anzeigen des durch die Erfassungseinrichtung erfassten Werts.

4. Informationsverarbeitungssystem gemäß Anspruch 3, wobei, wenn die Bestimmungseinrichtung bestimmt, dass die ausgewählten Daten Daten sind, die nicht in der spezifischen Bibliothek gespeichert sind, der Wert des registrierten Eigenschaftselements nicht durch die Anzeigeeinrichtung angezeigt wird.

5. Informationsverarbeitungsvorrichtung (110), die imstande ist zum Anfordern einer externen Vorrichtung (140) zur Durchführung einer Faxübertragung von Daten, die in einer Vielzahl von Bibliotheken gespeichert sind, wobei Eigenschaftselemente, umfassend ein Eigenschaftselement mit einer Faxnummer als Wert, die jeweiligen Daten zugeordnet sind, abhängig von der Bibliothek variieren können, in der die jeweiligen Daten gespeichert sind, wobei die Informationsverarbeitungsvorrichtung aufweist:
eine Anzeigeeinrichtung (240; 703) zum Anzeigen eines Bildschirms, um einem Benutzer zu ermöglichen, eine spezifische Bibliothek unter der Vielzahl von Bibliotheken auszuwählen und, für die spezifische Bibliothek, ein Eigenschaftselement, als ein Eigenschaftselement, von dem eine Faxnummer zu erfassen ist, unter der Vielzahl von Eigenschaftselementen auszuwählen, die den in der spezifischen Bibliothek gespeicherten Daten zugeordnet sind;
eine Registrierungseinrichtung (400; 804, 805) zum Registrieren des ausgewählten Eigenschaftselements in Zusammenhang mit der spezifischen Bibliothek unter der Vielzahl von Bibliotheken;
eine Auswahleinrichtung (240; 504) zum Auswählen von Daten, die einer Faxübertragung zu unterziehen sind, aus den Daten, die in der Vielzahl von Bibliotheken gespeichert sind;
eine Bestimmungseinrichtung (211; S902) zum Bestimmen, ob die durch die Auswahleinrichtung ausgewählten Daten Daten sind, die in der spezifischen Bibliothek gespeichert sind, für die ein Zusammenhang mit dem ausgewählten Eigenschaftselement registriert ist;
eine Erfassungseinrichtung (211; S904) zum, wenn die Bestimmungseinrichtung bestimmt, dass die ausgewählten Daten Daten sind, die in der spezifischen Bibliothek gespeichert sind, für die ein Zusammenhang mit dem ausgewählten Eigenschaftselement registriert ist, automatischen Erfassen eines Werts des registrierten Eigenschaftselements unter der Vielzahl von Eigenschaftselementen, die den in der spezifischen Bibliothek gespeicherten Daten zugeordnet sind; und
eine Anforderungseinrichtung (420) zum Anfordern der externen Vorrichtung zur Faxübertragung der ausgewählten Daten an eine Faxnummer, die durch den durch die Erfassungseinrichtung erfassten Wert bezeichnet wird, als Ziel.

6. Informationsverarbeitungsvorrichtung gemäß Anspruch 5, wobei das ausgewählte Eigenschaftselement zum Speichern einer Faxnummer einer Sendequelle verwendet wird, wenn die ausgewählten Daten empfangen wurden.

7. Informationsverarbeitungsvorrichtung gemäß Anspruch 5, wobei die Vielzahl von Bibliotheken eine Bibliothek (214), die in der Informationsverarbeitungsvorrichtung umfasst ist, und eine Bibliothek (120, 130) außerhalb von dieser umfassen.

8. Informationsverarbeitungsvorrichtung gemäß Anspruch 5, wobei die Registrierungseinrichtung angepasst ist zum Registrieren des ausgewählten Eigenschaftselements in Zusammenhang mit der externen Vorrichtung.

9. Informationsverarbeitungsvorrichtung gemäß Anspruch 8, wobei die Registrierungseinrichtung angepasst ist zum Registrieren des ausgewählten Eigenschaftselements in Zusammenhang mit einem Faxtreiber zur Steuerung einer Faxfunktion der externen Vorrichtung.

10. Informationsverarbeitungsvorrichtung gemäß Anspruch 9, wobei die Registrierungseinrichtung angepasst ist zum Registrieren des ausgewählten Eigenschaftselements in Zusammenhang mit Spezifikationsinformationen zum Spezifizieren des Faxtreibers.

11. Verfahren zur Steuerung eines Informationsverarbeitungssystems, das zur Durchführung einer Faxübertragung von Daten imstande ist, die in einer Vielzahl von Bibliotheken gespeichert sind, wobei Eigenschaftselemente, umfassend ein Eigenschaftselement mit einer Faxnummer als Wert, die jeweiligen Daten zugeordnet sind, abhängig von der Bibliothek variieren können, in der die jeweiligen Daten gespeichert sind, wobei das Verfahren aufweist:
Anzeigen (703) eines Bildschirms, um einem Benutzer zu ermöglichen, eine spezifische Bibliothek unter der Vielzahl von Bibliotheken auszuwählen und, für die spezifische Bibliothek, ein Eigenschaftselement, als ein Eigenschaftselement, von dem eine Faxnummer zu erfassen ist, unter der Vielzahl von Eigenschaftselementen auszuwählen, die den in der spezifischen Bibliothek gespeicherten Daten zugeordnet sind;
Registrieren (804, 805) des ausgewählten Eigenschaftselements in Zusammenhang mit der spezifischen Bibliothek unter der Vielzahl von Bibliotheken;
Auswählen von Daten, die einer Faxübertragung zu unterziehen sind, aus den Daten, die in der Vielzahl von Bibliotheken gespeichert sind;
Bestimmen (S902), ob die ausgewählten Daten Daten sind, die in der spezifischen Bibliothek gespeichert sind, für die ein Zusammenhang mit dem ausgewählten Eigenschaftselement registriert ist;
automatisches Erfassen (S904), wenn bestimmt wird, dass die ausgewählten Daten Daten sind, die in der spezifischen Bibliothek gespeichert sind, für die ein Zusammenhang mit dem ausgewählten Eigenschaftselement registriert ist, eines Werts des registrierten Eigenschaftselements unter der Vielzahl von Eigenschaftselementen, die den in der spezifischen Bibliothek gespeicherten Daten zugeordnet sind; und
Einstellen (S911) des erfassten Werts als eine Zielfaxnummer der ausgewählten Daten.

12. Verfahren zur Steuerung einer Informationsverarbeitungsvorrichtung (110), die imstande ist zum Anfordern einer externen Vorrichtung (140) zur Durchführung einer Faxübertragung von Daten, die in einer Vielzahl von Bibliotheken gespeichert sind, wobei Eigenschaftselemente, umfassend ein Eigenschaftselement mit einer Faxnummer als Wert, die jeweiligen Daten zugeordnet sind, abhängig von der Bibliothek variieren können, in der die jeweiligen Daten gespeichert sind, wobei das Verfahren aufweist:
Anzeigen (703) eines Bildschirms, um einem Benutzer zu ermöglichen, eine spezifische Bibliothek unter der Vielzahl von Bibliotheken auszuwählen und, für die spezifische Bibliothek, ein Eigenschaftselement, als ein Eigenschaftselement, von dem eine Faxnummer zu erfassen ist, unter der Vielzahl von Eigenschaftselementen auszuwählen, die den in der spezifischen Bibliothek gespeicherten Daten zugeordnet sind;
Registrieren (804, 805) des ausgewählten Eigenschaftselements in Zusammenhang mit der spezifischen Bibliothek unter der Vielzahl von Bibliotheken;
Auswählen von Daten, die einer Faxübertragung zu unterziehen sind, aus den Daten, die in der Vielzahl von Bibliotheken gespeichert sind;
Bestimmen (S902), ob die ausgewählten Daten Daten sind, die in der spezifischen Bibliothek gespeichert sind, für die ein Zusammenhang mit dem ausgewählten Eigenschaftselement registriert ist;
automatisches Erfassen (S904), wenn bestimmt wird, dass die ausgewählten Daten Daten sind, die in der spezifischen Bibliothek gespeichert sind, für die ein Zusammenhang mit dem ausgewählten Eigenschaftselement registriert ist, eines Werts des registrierten Eigenschaftselements unter der Vielzahl von Eigenschaftselementen, die den in der spezifischen Bibliothek gespeicherten Daten zugeordnet sind; und
Anfordern der externen Vorrichtung zur Faxübertragung der ausgewählten Daten an eine Faxnummer, die durch den erfassten Wert bezeichnet wird, als Ziel.

13. Programm zum Veranlassen eines Computers zur Durchführung des Verfahrens gemäß Anspruch 11 oder 12.

## Revendications

1. Système de traitement d'informations pouvant effectuer une transmission par télécopie de données mémorisées dans une pluralité de bibliothèques, dans lequel des articles de propriété, comprenant un article de propriété ayant un numéro de télécopie en tant que valeur, qui sont attribués à des données respectives, peuvent varier en fonction de la bibliothèque dans laquelle sont mémorisées les données respectives, le système de traitement d'informations comprenant :
un moyen d'affichage (240 ; 703) destiné à afficher un écran permettant à un utilisateur de sélectionner une bibliothèque spécifique parmi la pluralité de bibliothèques et de sélectionner, pour la bibliothèque spécifique, un article de propriété, en tant qu'article de propriété à partir duquel doit être acquis un numéro de télécopie, parmi la pluralité d'articles de propriété attribués aux données mémorisées dans la bibliothèque spécifique ;
un moyen d'enregistrement (400 ; 804, 805) destiné à enregistrer l'article de propriété sélectionné en association avec la bibliothèque spécifique parmi la pluralité de bibliothèques ;
un moyen de sélection (240 ; 504) destiné à sélectionner des données à transmettre par télécopie parmi les données mémorisées dans la pluralité de bibliothèques ;
un moyen de détermination (211 ; S902) destiné à déterminer si les données sélectionnées par le moyen de sélection sont des données mémorisées dans la bibliothèque spécifique pour laquelle est enregistrée une association avec l'article de propriété sélectionné ;
un moyen d'acquisition (211 ; S904) destiné, lorsque le moyen de détermination détermine que les données sélectionnées sont des données mémorisées dans la bibliothèque spécifique pour laquelle est enregistrée une association avec l'article de propriété sélectionné, à acquérir automatiquement une valeur de l'article de propriété enregistré parmi la pluralité d'articles de propriété attribués aux données mémorisées dans la bibliothèque spécifique ; et
un moyen de définition (211 ; S911) destiné à définir la valeur acquise par le moyen d'acquisition en tant que numéro de télécopie de destination des données sélectionnées.

2. Système de traitement d'informations selon la revendication 1, dans lequel l'article de propriété sélectionné est utilisé pour mémoriser un numéro de télécopie d'une source de transmission après la réception des données sélectionnées.

3. Système de traitement d'informations selon la revendication 1, dans lequel le moyen d'affichage est apte à afficher la valeur acquise par le moyen d'acquisition.

4. Système de traitement d'informations selon la revendication 3, dans lequel, lorsque le moyen de détermination détermine que les données sélectionnées sont des données qui ne sont pas mémorisées dans la bibliothèque spécifique, la valeur de l'article de propriété enregistré n'est pas affichée par le moyen d'affichage.

5. Appareil de traitement d'informations (110) pouvant demander à un dispositif externe (140) d'effectuer une transmission par télécopie de données mémorisées dans une pluralité de bibliothèques, dans lequel les articles de propriété, comprenant un article de propriété ayant un numéro de télécopie en tant que valeur, qui sont attribués à des données respectives, peuvent varier en fonction de la bibliothèque dans laquelle sont mémorisées les données respectives, l'appareil de traitement d'informations comprenant :
un moyen d'affichage (240 ; 703) destiné à afficher un écran permettant à un utilisateur de sélectionner une bibliothèque spécifique parmi la pluralité de bibliothèques et de sélectionner, pour la bibliothèque spécifique, un article de propriété, en tant qu'article de propriété à partir duquel doit être acquis un numéro de télécopie, parmi la pluralité d'articles de propriété attribués aux données mémorisées dans la bibliothèque spécifique ;
un moyen d'enregistrement (400 ; 804, 805) destiné à enregistrer l'article de propriété sélectionné en association avec la bibliothèque spécifique parmi la pluralité de bibliothèques ;
un moyen de sélection (240 ; 504) destiné à sélectionner des données à transmettre par télécopie parmi les données mémorisées dans la pluralité de bibliothèques ;
un moyen de détermination (211 ; S902) destiné à déterminer si les données sélectionnées par le moyen de sélection sont des données mémorisées dans la bibliothèque spécifique pour laquelle est enregistrée une association avec l'article de propriété sélectionné ;
un moyen d'acquisition (211 ; S904) destiné, lorsque le moyen de détermination détermine que les données sélectionnées sont des données mémorisées dans la bibliothèque spécifique pour laquelle est enregistrée une association avec l'article de propriété sélectionné, à acquérir automatiquement une valeur de l'article de propriété enregistré parmi la pluralité d'articles de propriété attribués aux données mémorisées dans la bibliothèque spécifique ; et
un moyen de demande (420) destiné à demander au dispositif externe de transmettre par télécopie les données sélectionnées à un numéro de télécopie indiqué par la valeur acquise, par le moyen d'acquisition, en tant que destination.

6. Appareil de traitement d'informations selon la revendication 5, dans lequel l'article de propriété sélectionné est utilisé pour mémoriser un numéro de télécopie d'une source de transmission après la réception des données sélectionnées.

7. Appareil de traitement d'informations selon la revendication 5, dans lequel la pluralité de bibliothèques comprend une bibliothèque (214) comprise à l'intérieur de l'appareil de traitement d'informations et une bibliothèque (120, 130) située à l'extérieur de ce dernier.

8. Appareil de traitement d'informations selon la revendication 5, dans lequel le moyen d'enregistrement est apte à enregistrer l'article de propriété sélectionné en association avec le dispositif externe.

9. Appareil de traitement d'informations selon la revendication 8, dans lequel le moyen d'enregistrement est apte à enregistrer l'article de propriété sélectionné en association avec un pilote de télécopie destiné à commander une fonction de télécopie du dispositif externe.

10. Appareil de traitement d'informations selon la revendication 9, dans lequel le moyen d'enregistrement est apte à enregistrer l'article de propriété sélectionné en association avec des informations de spécification destinées à spécifier le pilote de télécopie.

11. Procédé de commande d'un système de traitement d'informations pouvant effectuer une transmission par télécopie de données mémorisées dans une pluralité de bibliothèques, dans lequel des articles de propriété, comprenant un article de propriété ayant un numéro de télécopie en tant que valeur, qui sont attribués à des données respectives, peuvent varier en fonction de la bibliothèque dans laquelle sont mémorisées les données respectives, le procédé consistant à :
afficher (703) un écran permettant à un utilisateur de sélectionner une bibliothèque spécifique parmi la pluralité de bibliothèques et de sélectionner, pour la bibliothèque spécifique, un article de propriété, en tant qu'article de propriété à partir duquel doit être acquis un numéro de télécopie, parmi la pluralité d'articles de propriété attribués aux données mémorisées dans la bibliothèque spécifique ;
enregistrer (804, 805) l'article de propriété sélectionné en association avec la bibliothèque spécifique parmi la pluralité de bibliothèques ;
sélectionner des données à transmettre par télécopie parmi les données mémorisées dans la pluralité de bibliothèques ;
déterminer (S902) si les données sélectionnées sont des données mémorisées dans la bibliothèque spécifique pour laquelle est enregistrée une association avec l'article de propriété sélectionné ;
acquérir automatiquement (S904), lorsqu'il a été déterminé que les données sélectionnées sont des données mémorisées dans la bibliothèque spécifique pour laquelle est enregistrée une association avec l'article de propriété sélectionné, une valeur de l'article de propriété enregistré parmi la pluralité d'articles de propriété attribués aux données mémorisées dans la bibliothèque spécifique ; et
définir (S911) la valeur acquise en tant que numéro de télécopie de destination des données sélectionnées.

12. Procédé de commande d'un appareil de traitement d'informations (110) pouvant demander à un dispositif externe (140) d'effectuer une transmission par télécopie de données mémorisées dans une pluralité de bibliothèques, dans lequel des articles de propriété, comprenant un article de propriété ayant un numéro de télécopie en tant que valeur, qui sont attribués à des données respectives, peuvent varier en fonction de la bibliothèque dans laquelle sont mémorisées les données respectives, le procédé consistant à :
afficher (703) un écran permettant à un utilisateur de sélectionner une bibliothèque spécifique parmi la pluralité de bibliothèques et de sélectionner, pour la bibliothèque spécifique, un article de propriété, en tant qu'article de propriété à partir duquel doit être acquis un numéro de télécopie, parmi la pluralité d'articles de propriété attribués aux données mémorisées dans la bibliothèque spécifique ;
enregistrer (804, 805) l'article de propriété sélectionné en association avec la bibliothèque spécifique parmi la pluralité de bibliothèques ;
sélectionner des données à transmettre par télécopie parmi les données mémorisées dans la pluralité de bibliothèques ;
déterminer (S902) si les données sélectionnées sont des données mémorisées dans la bibliothèque spécifique pour laquelle est enregistrée une association avec l'article de propriété sélectionné ;
acquérir automatiquement (S904), lorsqu'il a été déterminé que les données sélectionnées sont des données mémorisées dans la bibliothèque spécifique pour laquelle est enregistrée une association avec l'article de propriété sélectionné, une valeur de l'article de propriété enregistré parmi la pluralité d'articles de propriété attribués aux données mémorisées dans la bibliothèque spécifique ; et
demander au dispositif externe de transmettre par télécopie les données sélectionnées à un numéro de télécopie indiqué par la valeur acquise en tant que destination.

13. Programme destiné à amener un ordinateur à mettre en oeuvre le procédé selon la revendication 11 ou 12.
